# EUROPEAN PATENT SPECIFICATION

(11) **EP 3 663 226 B1**
(45) Date of publication and mention of the grant of the patent: **31.01.2024**
(21) Application number: 19216413.5
(22) Date of filing: 09.11.2016
(51) Int. Cl.: B65D 49/04, B65D 41/62, B65D 55/02

(54) **CLOSURE FOR A CONTAINER NECK**
VERSCHLUSS FÜR EINEN BEHÄLTERHALS
FERMETURE POUR UN COL DE RÉCIPIENT

(30) Priority: 10.11.2015 GB 201519787; 30.11.2015 GB 201521045; 14.06.2016 GB 201610289
(43) Date of publication of application: 10.06.2020
(62) Divisional of application: 16801978.4
(73) Proprietor: GCL International S.A.R.L., 1246 Luxembourg (LU)
(72) Inventor: McPHERSON, Alexander Donald Meiklem, Falkirk, Central Scotland FK1 5PW (GB); RICHARDSON, David Conway, Wrexham, Wrexham LL11 5FH (GB)
(74) Representative: Perani & Partners S.p.A.

(56) References cited:
- EP-A2- 1 816 085
- WO-A1-2009/010722
- WO-A1-2013/113435
- WO-A2-2008/041119
- NL-C2- 1 004 376
- US-A- 4 540 100
- US-A- 4 813 561
- US-A1- 2011 259 844

## Description

### Field of the Invention

The present invention relates generally to a closure for a container, and particularly to a closure with means for indicating that a closure has been opened at least once.

### Background of the Invention

There is an increasing demand for tamper-indicating systems which ensure that a container is not re-filled with non-original contents. Whilst it is relatively easy to produce some form of tamper-evidence, it is much more difficult to provide tamper-evidence which cannot be either overcome without causing the tamper-evidence system to activate, or to activate and then return to a virtually visually identical state so as to appear non-activated.

A particularly useful method of providing tamper-evidence is to use a system in which a closure is initially located in a first position, but once removed can only be returned to a second position which is visually distinct from the first.

United States Patent No. US 5,738,231 describes a closure with a part which is moved during the opening process so that following opening it cannot pass back over a projection on a container finish. The result is that the closure can only return to a position which is axially displaced with respect to its original position.

International Patent Publication No. WO 02/096771 describes a closure in which two parts are initially adjacent each other and during the opening process the structure of the closure is changed so that a gap is generated between the two parts as a visual indication that the closure has been opened at least once.

International Patent Publication Nos. WO 2005/049443 and WO 2006/1 17505 also describe closures which generate a gap to indicate they have been opened at least once. In this case the gap is unobstructed. In other words, two parts of the closure are held apart without the requirement of an obstruction.

Such tamper-evident systems are only effective if they cannot be reversed. For example, in systems which use an obstructing member to hold two parts apart it is possible to cut the obstruction to allow a gap to be closed. International Patent Publication Nos. WO 2005/049443 and WO 2006/117505 describe closures which generate unobstructed gaps following relative rotation of one part with respect to another. The closures are provided with some internal mechanism for preventing the two parts from being rotated back to their original relative positions. For example, ratchet arrangements present on the side walls of the parts can be used to prevent unwanted rotation. However, such "lateral" ratchet arrangements have been found to be defeatable if sufficient reverse turning torque is applied.

There is a need for an increased level of resistance to defeating the tamper-evidence provided by such gap-generating closures by reverse turning before and/or after the gap is generated so as to prevent formation of the gap and/or to close the gap.

International Patent Publication No. WO 2013/113435 describes a tamper-evident closure for a container, comprising a first portion including inner and outer parts and a second portion. The outer part of the first portion is rotatable relative to the inner part from a first position in which at least part of the first and second portions are adjacent each other to a second position in which there is a gap therebetween. The first portion comprises locking means for irreversibly locking the closure in the second position upon first opening so that the gap cannot be closed, and the inner part includes a line of weakness which breaks if the outer part is reverse rotated relative to the inner part. The gap generated during first opening of the closure indicates that the closure has been opened at least once. If an attempt is made to reverse open the closure, the line of weakness of the inner part breaks and thereafter normal operation of the closure is not possible. In addition, the closure may comprise upper and lower shell parts that are initially joined along a split line by a plurality of frangible bridges which will break if either: i) the lower shell part is rotated before initial opening; or ii) an attempt is made to pull the top part of the closure off without unscrewing.

International Patent Publication No. WO 2009/010717 discloses a tamper-evident closure for a container, the closure comprising a first portion including inner and outer parts and a second portion, the portions being provided in a shell which is separable into a first and second part. The outer part is movable relative to the inner part from a first position in which the first and second shell parts are adjacent each other to a second position in which there is a gap therebetween. The closure comprises locking means for locking the closure it in the second position upon first opening so that the gap cannot easily be closed, and the closure further comprises indicator means for providing a visual indication on the shell if the locking means is overridden to close the gap.

The indicator means may be adapted to activate following axial overriding of the locking means to close the gap. For example, if sufficient force is applied to the top of the closure the locking means may be overridden (possibly by breaking) and the inner and outer parts may be returned to the first position to close the gap by relative axial movement. In this case the indicator means are activated to mark the top of the shell to show that, even though the gap is not present, the closure has been opened.

It is an object of the present invention to provide further improvements relating to a closure for a container neck.

### Summary of the Invention

According to a first aspect there is provided a closure as claimed in claim 1. According to a second aspect there is provided a container comprising a container neck provided with a closure, the closure according to the first aspect. According to a third aspect there is provided a method of forming a closure, the closure according to the first aspect.

A closure for a container neck, the closure comprising: a first portion comprising a body for fixing to a container neck, and a second portion comprising a cap releasably engageable with the body; the cap comprising a closure seal on a closure seal support portion, the closure seal for sealing against the body when the cap is engaged with the body in a closed condition of the closure; the closure seal support portion formed from a first plastics material, the closure seal formed from a second plastics material that is more compliant than the first plastics material, and the closure seal formed integrally with the closure seal support portion, in which the cap comprises inner and outer parts, the outer part is rotatable in a first direction relative to the inner part from a first position in which a region of the outer part is immediately adjacent a region of the body to a second position in which there is a gap between a region of the outer part and a region of the body, and the cap further comprises a locking arrangement for irreversibly locking the outer part in the second position, and in which the inner part comprises an inner ratchet component and the closure seal support portion is a portion of the inner ratchet component, is disclosed.

The second plastics material may be silicone or thermoplastic elastomeric resin.

The closure seal may be moulded integrally with the cap. The cap may comprise an in-moulded closure seal. The seal may be a top seal. The inner ratchet component may have a bi-injection moulded top seal.

The inner part may include a line of weakness that breaks if the outer part is rotated relative to the inner part in a second direction opposite the first direction. The line of weakness may be formed by a line of reduced thickness of a wall of the inner part.

The cap may further comprise a shell and an indicating arrangement for providing a visible marking in a side wall of the shell in response to an axial force applied to the cap to close the gap.

The closure may further comprise a non-return fitment.

The second plastics material may be more heat resistant than said first plastics material.

The first plastics material may be polyethylene terephthalate (PET). The second plastics material may be fibre reinforced polymer composite.

The present disclosure thus relates to a closure with a bi-moulded design.

The present disclosure also relates to how a stopper or cork version of the closure is sealed. The bi-moulded seal may be the main seal and the stopper or cork may then only be there to sound or pop when the product is opened. The closure may thus comprise a stopper or cork (which may be formed from natural or synthetic material).

The closure may comprise a shell, for example a generally tubular metal shell. The shell may be split into two parts upon first opening, for example a top cap (which is removable) and a lower sleeve (which remains on a container neck). The two parts may be initially immediately adjacent each other and then upon first opening a gap may be formed between them. The gap may be unobstructed.

The first portion may be a pourer component. The first portion may be securable on bottle neck, for example by a snap-on arrangement or a roll-on arrangement.

The inner part and/or outer part may include a top plate, and part of a locking arrangement for preventing the gap being closed may be carried on or by the or each top plate.

The inner and outer parts may have respective top plates which include corresponding ratchet parts that engage to prevent relative rotation of the inner and outer parts. This type of ratchet arrangement may be referred to as a longitudinal ratchet arrangement, as opposed to known lateral arrangements which are positioned on side walls.

The first portion may be adapted to be connected to a container. Certain industries demand closures with a second portion comprising a cap and a first portion comprising a sleeve which is connected to a container; for example, the spirits industry.

The closure may further comprise a fitment such as a non-return fitment.

Alternatively, the first portion may be adapted to engage a fitment associated with the container. Certain industries, in particular the spirits industry, demand additional measures to prevent tampering. In-bore fitments, such as non-return fitments, are often fitted to containers to prevent re-filling regardless of other tamper-proofing measures.

The closure may include an arrangement for preventing the inner part from moving relative to the second portion until it has reached the second position.

The gap may be unobstructed. This means that the closure would not have to rely on an obstructing member becoming trapped. By forming an unobstructed gap, it is not possible to defeat the tamper-evidence by a simple cutting operation. The gap may be formed at the respective adjacent peripheries of the first and second portions. The inner part may include a section which extends beyond the outer part towards the first portion in the second position; the section may be positioned so as to be visible through the gap.

The first portion may be permanently fixed in its position on the container. This can be used to prevent the first portion from being moved to close the gap.

The second portion may further include a lateral ratchet arrangement for locking the inner and outer parts in the second position. This provides increased resistance to resetting.

The second portion may include engagement formations and the lateral ratchet arrangement may be located above the formations. The second portion may include formations, such as screw threads, for engaging the container or in-bore fitment. In such cases the ratchet arrangement or other locking mechanism may be located above the formations so as to increase the difficulty in accessing and tampering with the locking arrangement.

The present disclosure also relates to a closure with a side marking mechanism to indicate tampering.

A closure for a container neck that comprises a first portion comprising a body for fixing to the container neck and a second portion comprising a cap releasably engageable with the body is disclosed. The closure comprises a seal support portion formed from a first plastics material and a seal formed from a second plastics material that is more compliant than the first plastics material, the seal formed integrally with the seal support portion. A closure with a bi-injection moulded seal is disclosed. A method of forming the closure comprising the step of bi-injection moulding the seal support portion and the seal is also disclosed. A container comprising a container neck provided with the closure is further disclosed.

Different aspects and embodiments of the invention may be used separately or together without departing from the scope of the invention as defined by the appended claims.

### Brief Description of the Drawings

The present invention will now be more particularly described, with reference to the accompanying drawings, in which:
**Figure 1** is a section of a prior art closure, the closure shown in a first, unopened condition and shown attached to a container neck;
**Figure 2** is a side elevation of the prior art closure of **Figure 1****,** shown prior to attachment to a container neck;
**Figure 3** shows the prior art closure of **Figure 1** after a first opening stage;
**Figure 4** shows the prior art closure of **Figure 2** after a first opening stage;
**Figure 5** shows the prior art closure of **Figure 4** after a second opening stage;
**Figure 6** shows the prior art closure of **Figure 5** after a top cap thereof has been re-fitted;
**Figure 7** shows the prior art closure of **Figure 1** following an attempt at reverse opening thereof;
**Figure 8** is a perspective view of the prior art closure of **Figure 7****;**
**Figures 9 to 12** show a first embodiment of a closure comprising a closure seal formed integrally with a closure seal support portion;
**Figures 13 to 16** show a second embodiment of a closure comprising a closure seal formed integrally with a closure seal support portion;
**Figure 17** shows a second embodiment of a closure comprising a closure seal formed integrally with a closure seal support portion;
**Figure 18** shows a second example of a closure having a bi-moulded seal and seal support portion;
**Figures 19 to 24** show a third example of a closure having a bi-moulded seal and seal support portion;
**Figures 25 to 27** show examples of a closure body for fixing to a container neck and a retaining member formed integrally with the body;
**Figure 28** shows a further example of a body and a retaining member formed integrally with the body;
**Figure 29** shows steps in a method of bi-moulding the body with integral retaining member of **Figure 28****;**
**Figures 30 to 32** shows features of another example of a body and a retention member formed integrally with the body;
**Figures 33 and 34** show a feature of a fourth example of a closure having a seal formed integrally with a seal support portion;
**Figures 35 to 38** show further embodiments of closures having a bi-moulded seal and seal support portion, the closures being aluminium closures;
**Figures 39 to 42** show further embodiments of closures having a bi-moulded seal and seal support portion, the closures being plastic closures;
**Figures 43 to 47** show features of an example closure ratchet arrangement;
**Figure 48** shows steps in opening and reclosing a double gap generator closure;
**Figures 49** to **51** show features of a closure ratchet arrangement with side marking mechanism;
**Figure 52** shows an inner ratchet of a closure ratchet arrangement with a side marking generator mechanism; and
**Figures 53** to **60** show individual components usable in different versions of a closure.

### Description

Example embodiments are described below in sufficient detail to enable those of ordinary skill in the art to embody and implement the apparatus, systems and processes herein described. It is important to understand that embodiments of the invention can be provided in many alternate forms and the invention should not be construed as limited to the examples set forth herein but by the scope of the appended claims.

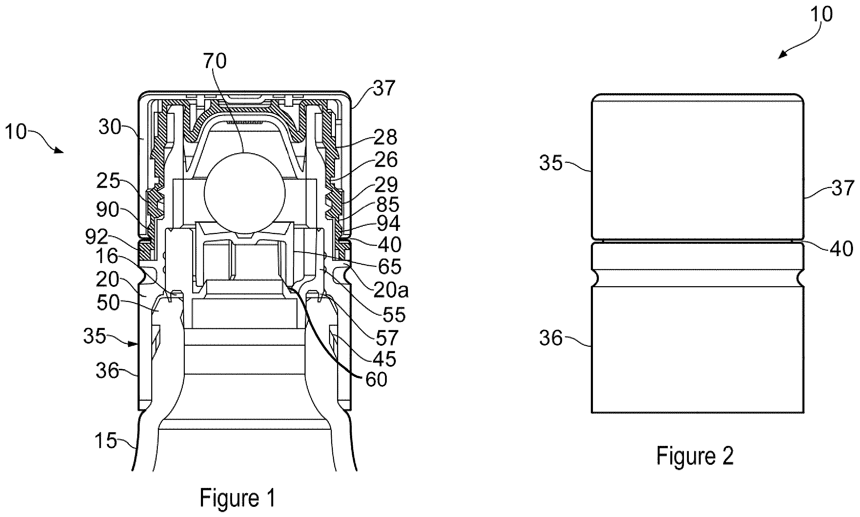

A prior art closure for a container neck will now be described with reference to **Figures 1 to 8****.** The closure generally comprises a portion comprising a body for fixing to a container neck, and a portion comprising a cap releasably engageable with the body. The portion comprising the cap comprises inner and outer parts, and the outer part is rotatable relative to the inner part upon first opening of the closure. In the illustrated embodiment, the outer part is rotatable relative to the inner part in a first direction from a first position in which a region of the outer part is immediately adjacent a region of the body to a second position in which there is a gap between the region of the outer part and the region of the body. The portion comprising the cap further comprises a locking arrangement for irreversibly locking the outer part in the second position. The generation of a gap upon first opening of the prior art closure indicates that the closure has been opened at least once. The prior art closure of **Figures 1 to 8** includes a further tamper-evidence feature that activates if an attempt is made to open the closure by rotating the outer part in the opposite direction to the normal direction of opening, to avoid activating the gap generating tamper-evidence system.

Referring first to **Figures 1 and 2** there is shown a prior art closure generally indicated 10. In **Figure 1** the closure 10 is shown secured onto a container neck 15. The structure and arrangement is similar to that described in WO 2009/010722.

The closure 10 comprises a main pourer body 20, an inner part 25 and an outer part 30. A metal shell 35 forms an outer casing to the closure and is divided into a cylindrical lower part 36 and a cup-shape second part 37. Together the main body 20 and the shell part 36 comprise a second portion and the inner and outer parts 25, 30 plus the shell part 37 comprises a cap-like first portion.

The upper and lower shell parts 36, 37 are separated at a split line 40 formed by a cutting process once the shell 35 has been applied to the first and second portions of the closure 10.

The upper and lower shell parts 36, 37 are initially joined along the split line 40 by a plurality of frangible bridges which will break if either: i) the lower shell part 36 is rotated before initial opening of the closure 10; or ii) an attempt is made to pull the top part of the closure 10 off without unscrewing.

The inner part 25 of the closure 10 extends beyond the split line 40 and the open end of the outer part 30 to provide a dog-leg shape terminal portion 90 which rests on a shoulder 20a on the main body 20 so that one half 92 of the terminal portion 90 fits beneath the upper end of the lower shell part 36 and the other half 94 of the terminal portion 90 fits in the upper shell part 37. Above the shell split line 40 a plurality of frangible bridges (not shown) are formed in the inner part 25 to form a split line 85.

The inner part 25 also has a line of weakness 26 provided approximately half way along its side skirt formed by a plurality of frangible bridges 27. This divides the inner part 25 into a first portion 28 and a second portion 29.

The main body 20 is fixed onto the container neck 15 by clips 45 which project inwardly and engage under a shoulder 50 of the container neck 15.

A valve housing 55 is clipped into the main body 20 and includes a sealing lip 57 which seals against the top surface 16 of the container neck 15. A float valve 65 is housed in the housing 55 and can seal against a valve seat 60 to prevent re-filling of the container. A valve control ball 70 is located on top of the float valve 65. A float and ball combination provides horizontal re-fill protection and superior vibration aided vertical re-fill protection.

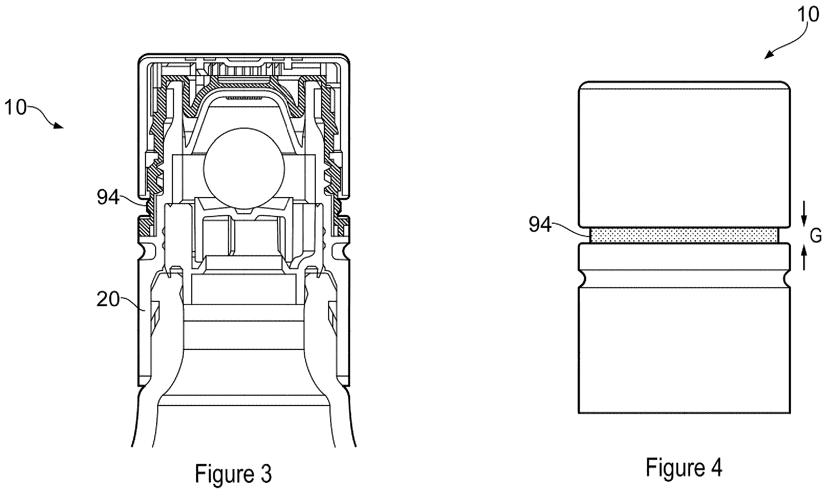

In normal operation, the second part 37 of the shell 35 is rotated anti-clockwise and the unscrewing action, upon initial opening of the closure 10, breaks the frangible bridges on the split line 40. The outer part 30 unscrews together with the second part 37 of the shell 35 whilst the inner part 25 remains held on the main body 20. The unscrewing continues to the position shown in **Figures 3 and 4** until a ratchet locking mechanism locks the outer part 30 to the inner part 25.

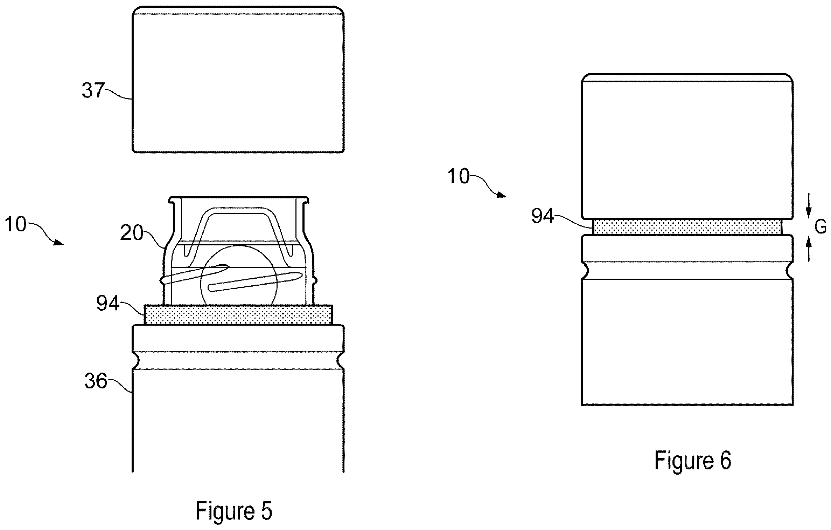

With the outer and inner parts 30, 25 locked together the inner part 25 can then be unscrewed from the main body 20. Because the terminal portion 92 is held under the shell part 36, when the inner part 25 rotates it breaks along the split line 85. The result is that the terminal portion 90 of the inner part 25 remains held on the main body 20 so that the half 94 produces a visible upstanding band as shown in **Figure 5****.**

When the cap (shell part 37, outer part 30, inner part 25) is screwed back onto the main body 20, a gap G is formed between the first and second shell parts 36, 37. This is because the outer part 30 cannot be screwed completely back down onto the inner part 25 by virtue of the locking mechanism. In addition, the band 94 of the inner part 25 projects above the shell part 36 so as to be visible in the gap G as shown in **Figure 6****.**

The gap G formed between the lower and upper shell parts 36, 37 is unobstructed in the sense that there is no obstruction member trapped between the parts 36, 37. The absence of an obstructing member overcomes the problem that an obstructing member can be severed to enable the gap to be closed to make the closure appear as through it had now been opened.

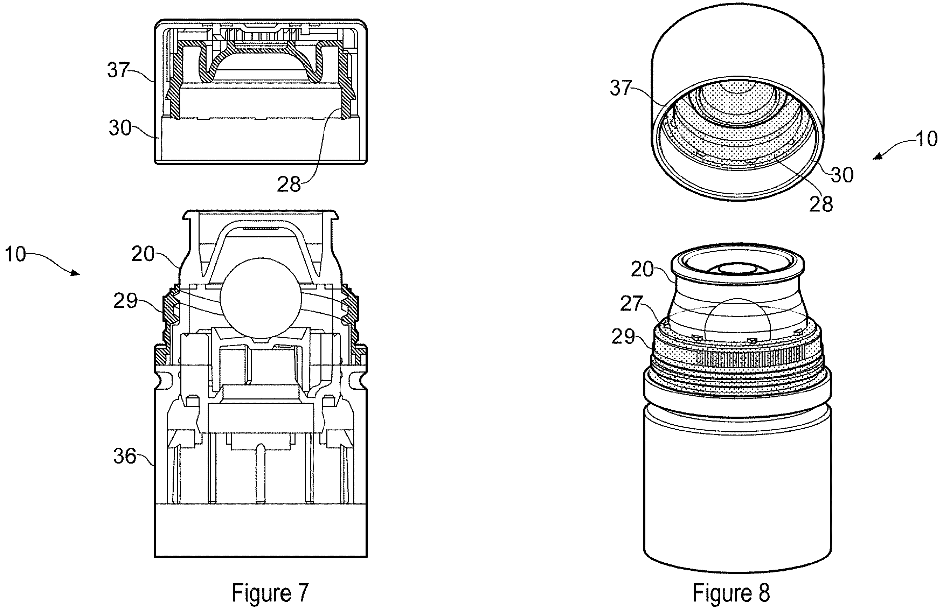

The gap generation feature of the prior art closure 10 provides a visual indication that the closure has been opened at least once. In **Figures 7 and 8** the prior art closure of **Figures 1 and 2** is shown following an attempt to overcome this tamper evidence feature by reverse opening.

If the upper shell part 37 is rotated clockwise, the inner part first portion 28 is caused to rotate relative to the inner part second portion 29, which causes the frangible bridges 27 of the line of weakness 26 of the inner part 25 to break. The inner part 25 splits along the line 26 and the upper shell part 37 can be removed with the outer part 30 and the inner part first portion 28. In other words, if the prior art closure 10 is deliberately (or accidentally) rotated in the direction opposite to that required for normal operation, in which the gap G is generated, then the inner part 25 is caused to break so that thereafter normal operation of the prior art closure 10 is not possible.

There are no internal screw threads on the inner part first portion 28 so the top cap cannot be screwed back on the main body 20.

The break will occur if reverse opening is attempted (deliberately or accidentally) either before or after the gap G is generated.

According to an aspect of the invention, there is provided a closure for a container neck, the closure comprising a seal formed integrally with a seal support portion. According to a related aspect, there is provided a method of forming the closure. According to another related aspect, there is provided a container comprising a container neck provided with the closure.

There will now be described closures that comprise a first portion comprising a body for fixing to a container neck, and a second portion comprising a cap releasably engageable with the body, the closure comprising a seal support portion formed from a first plastics material and a seal formed from a second plastics material that is more compliant than the first plastics material, the seal formed integrally with the seal support portion.

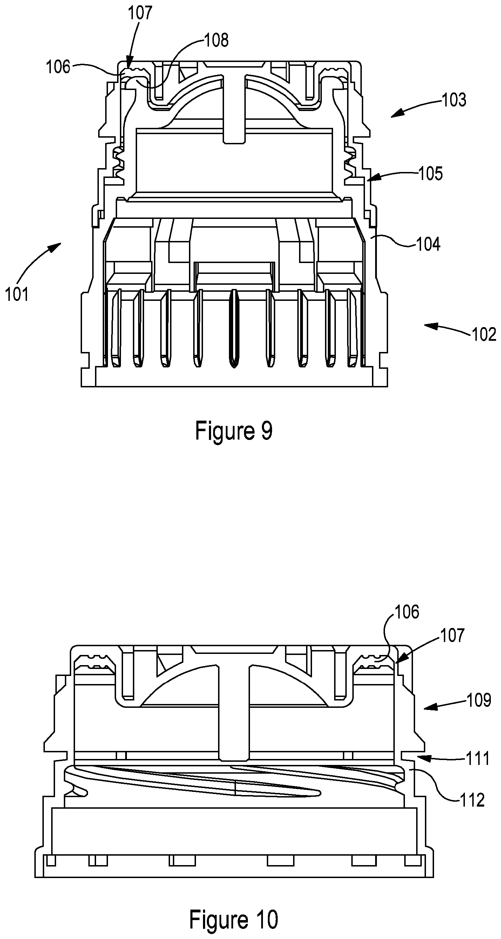

A first embodiment will now be described with reference to **Figures 9 to 12****.** **Figure 9** shows a closure 101 comprising a first portion, indicated generally at 102 and a second portion, indicated generally at 103. The closure 101 is similar in some respects to the prior art closure 10 of **Figures 1 to 8****.**

The first portion 102 comprises a body, indicated at 104, for fixing to a container neck. The second portion 103 comprises a cap, indicated at 105, that is releasably engageable with the body 104. The cap 105 is movable relative to the body 104 from and into a closed condition of the closure 101.

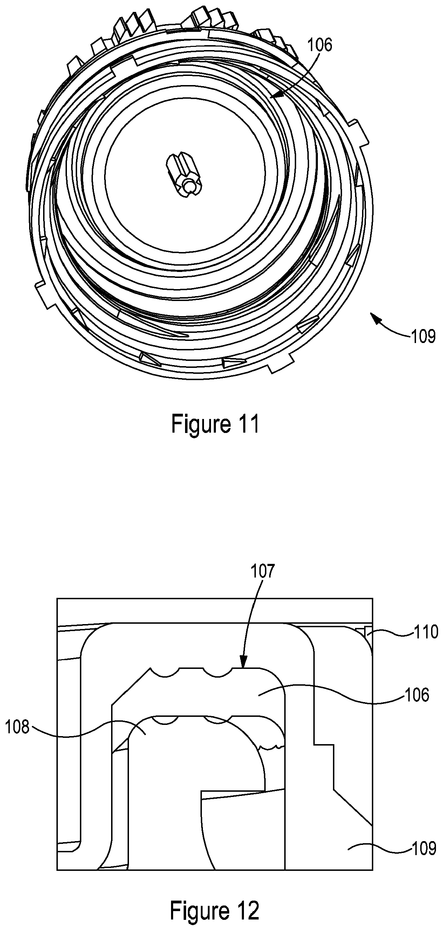

The cap 105 comprises a closure seal 106 on a closure seal portion 107, the closure seal 106 sealing against the body 104 when the cap 105 is engaged with the body 104 in a closed condition of the closure 101, as can be seen in **Figures 9** **and** **12****.**

The closure seal support portion 107 is formed from a first plastics material. The closure seal 106 is formed from a second plastics material. The second plastics material from which the closure seal 106 is formed is more compliant than the first plastics material from which the closure seal support portion 107 is formed. The greater compliance of the closure seal 106 allows the closure seal 106 to be compressed and/or to conform to provide an efficient seal.

Advantageously, the closure seal 106 is formed integrally with the closure support portion 107. Reliable sealing between the first portion, which remains on the container neck when the closure is opened, and the second portion, which is removed when the closure is opened and replaced when the closure is re-closed, is achieved. According to a method of forming the closure I0I, the closure seal support portion 107 and the closure seal 106 are bi-injection moulded.

In this first embodiment, the closure seal 106 is a top seal. When the cap 105 is fully engaged with the body 104, the closure seal 106 provides a seal between the first portion 102 and the second portion 103.

When the closure 101 is provided on a container neck, the seal advantageously prevents leakage of container contents in either liquid or vapour form. More specifically, the seal functions to prevent contents evaporating from the container. The vaporisation of contents has been experienced when containers have been transported from place to another, such as from one country to another with a hotter climate, and also when containers have been stored in conditions deviating from recommended storage conditions, in particular where an increase in temperature is involved. In addition, the seal functions to prevent contents leaking from the container. The leakage of contents has been experienced when containers are handled such as for packing, transporting and/or display. The seal beneficially allows containers to be transported and stored in any orientation. The seal can offer improved convenience of container handling and reduced wastage of container contents.

The second plastics material may be any suitable material. In an example, the second plastics material from which the closure seal is formed is a silicone resin. In an example, the second plastics material from which the closure seal is formed is a thermoplastic elastomer (TPE) resin.

The thermoplastic elastomer may be selected from the following group: MPR (Melt Processable Rubber), TPE-A (Thermoplastic Amide Elastomer), TPE-E (Thermoplastic Polyester Elastomer), TPE-O (Thermoplastic Olefinic Elastomer), TPE-S (Styrenic block copolymer), TPE-U (Thermoplastic Polyurethane Elastomer), TPE-V (Thermoplastic Vulcanisate).

A thermoplastic elastomer resin (TPE) is a polymer blend or compound which, above its melt temperature, exhibits a thermoplastic character that enables it to be shaped into a fabricated article and which, within its design temperature range, possesses elastomeric behaviour without cross-linking during fabrication. TPE materials have the potential to be recyclable since they can be molded, extruded and reused like plastics.

The second plastics material may be a fibre reinforced polymer composite.

Fibre reinforced polymer materials are composites consisting of high strength fibres (reinforcement) embedded in polymeric matrices. Fibres in these materials are the load-carrying elements and provide strength and rigidity, while the polymer matrices maintain the fibres alignment (position and orientation) and protect them against the environment and possible damage. Specific properties of these materials (such as high-stiffness, high-strength, and low-density as compared to metals) make the material highly desirable.

A suitable fibre in accordance with the present invention is a synthetic fibre made of glass, carbon, aramid, aliphatic or semi-aromatic polyamides (Nylon) and/or Kevlar. A suitable polymeric matrix is a thermoplastics material. In a preferred embodiment of the present invention, the fibre reinforced polymer composite is selected from the group of nylon reinforced polymer, carbon filled polycarbonate and glass-fibre filled polycarbonate.

The first plastics material may be any suitable material.

In an embodiment, the body of the first portion is formed from a third plastics material. The third plastics material may be any suitable material.

The first and/or the third plastics material may be selected from the following group:
Polypropylene (PP), Polycarbonate (PC), Acrylonitrile Butadiene Styrene (ABS), Polyethylene terephthalate (PET), Polyethylene terephthalate glycol-modified (PETG), Standard and Modified Nylon 6, Nylon 6/6, Nylon 6,6,6 e.g. made of Polyamide resin, Copolyester, Polystyrene (PS), High Impact Polystyrene (HIPS), Polybutylene Terephthalate (PBT), Acetal (POM), Polyphenylene oxide (PPO), Delrin, Acrylic; Alloys or blends of the aforementioned.

In this first embodiment, the first portion 102 comprises an open pourer fitment.

According to this first embodiment, the closure seal 106 of the second portion 103 is arranged to seal against an anti-drip lip 108 of the body 104 of the first portion 102.

In this illustrated first embodiment, the cap 105 of closure 101 comprises an inner part 109 and an outer part 110. During first opening of the closure, the outer part 110 is rotatable in a first direction relative to the inner part 109 from a first position in which a region of the outer part 110 is immediately adjacent a region of the body 104 to a second position in which there is a gap between those respective regions of the outer part 110 and the body 104. The cap 105 further comprises a locking arrangement for irreversibly locking the outer part 110 in the second position. The locking arrangement comprises a ratchet locking arrangement. The inner part 109 of the cap 101 is an inner ratchet component. As shown in **Figures 9 to 12****,** the closure seal support portion 107 of closure 101 is a portion of the inner ratchet component 109. The first direction of rotation will typically be anti-clockwise.

As can be seen in **Figure 10** in particular, the inner part 109 includes a line of weakness I I I that breaks if the outer part 110 is rotated relative to the inner part 109 in a second direction opposite the first direction. Thus, the second direction of rotation will typically be clockwise.

According to the prior art closure 10 of **Figures 1 to 8****,** the line of weakness of the inner part thereof, which is arranged to break in the event of a 'reverse rotation' event, is formed by a plurality of frangible bridges.

Alternatively, and according to the closure 101 of **Figures 9 to 12****,** the line of weakness I I I is formed by a line of reduced thickness of a wall 112 of the inner part 109. In an example, the reduced wall thickness is formed by hot knifing. In an alternative example, the reduced wall thickness is formed by moulding.

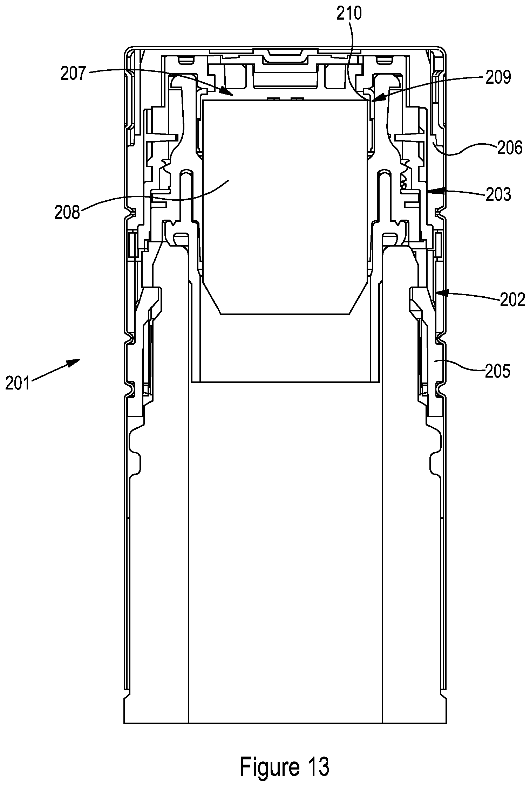

A first example will now be described with reference to **Figures 13 to 16****.** **Figure 13** shows a closure 201, comprising a first portion, indicated generally at 202 and a second portion, indicated generally at 203. The closure 201 is similar in some respects to the prior art closure 10 of **Figures 1 to 8** and is similar in some respects to the closure 101 of **Figures 9 to 12****.** The closure 201 is shown in **Figure 13** fitted to a container neck 204.

According to this first example, the first portion 202 comprises a body, indicated at 205, for fixing to a container neck. The second portion 203 comprises a cap, indicated at 206, that is releasably engageable with the body 205. The cap 206 is movable relative to the body 205 from and into a closed condition of the closure I0I.

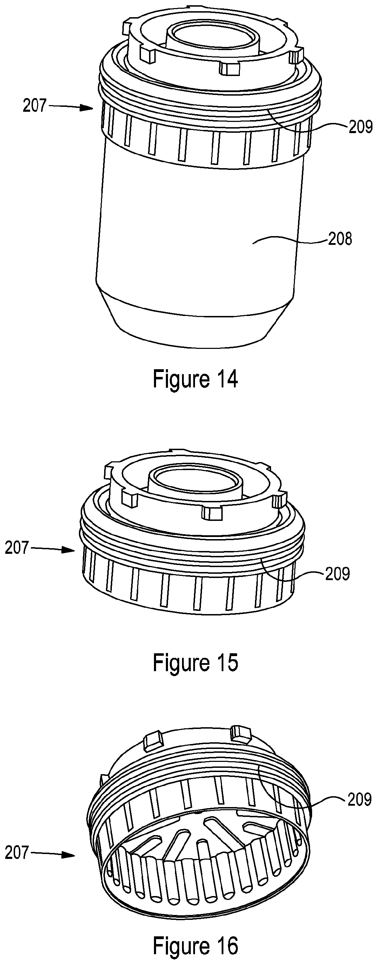

The cap 206 comprises a stopper holder 207. The stopper holder 207 is shown holding a stopper 208 in **Figures 13** **and** **14** and without a stopper attached in **Figures 15 and 16****.** In an example, the stopper 208 is a cork.

The cap 206 comprises a closure seal 209 on a closure seal portion 210. When the cap 206 is engaged with the body 205 in a closed condition of the closure 20I, as can be seen in **Figure 13****,** the closure seal 209 is in sealing abutment with the body 205. It can be seen from **Figure 13** that the closure seal 209 provides a seal between the first and second portions 202, 203 of the closure 201.

The closure seal support portion 210 is formed from a first plastics material, the closure seal 209 is formed from a second plastics material that is more compliant than the first plastics material, and the closure seal 209 is formed integrally with the closure support portion 210. According to a method of forming the closure 20I, the closure seal 209 is integrally formed with the closure seal support portion 210 by bi-injection moulding.

According to this illustrated example, the closure seal support portion 210 is a portion of the stopper holder 207.

In an example, the bi-moulded seal is the main seal and the stopper is only there to sound or pop like a cork when the container is opened.

In this example, the first portion 202 comprises an open pourer fitment.

From a comparison of the first and second example closures 101, 201, it can be seen that the closure seal can provide a seal that is disposed between the first and second portions in a more axial direction, as in the first embodiment closure 101, or a more radial direction, as in the first example closure 201. It is thus to be appreciated that a seal as described herein may be positioned differently between different closures and different closure types.

For example, a security closure having at least one tamper-evidence system or feature may be provided with a seal formed integrally with a seal support portion. The security closure may have a gap-generating system for generating one or more gaps upon first opening of the closure. The security closure may also have a 'break on reverse rotation' feature. A security closure provided with a seal formed integrally with a seal support portion may have any alternative or additional tamper-evidence feature. It is to be appreciated however that a closure that is not a security closure with the integrally formed seal and seal support portion disclosed herein.

The closure may comprise a shell, for example a generally tubular metal shell. The shell may be split into two parts upon first opening, for example a top cap (which is removable) and a lower sleeve (which remains on a container neck). The two parts may be initially immediately adjacent each other and then upon first opening a gap may be formed between them. The gap may be unobstructed.

The second portion of the closure may comprise a pourer component. The portion may be securable on a bottle neck, for example by a snap-on arrangement or a roll-on arrangement.

The inner part and/or the outer part of the second portion may include a top plate and part of the locking arrangement may be carried on the, or by each, top plate. The locking arrangement may comprise or include a ratchet arrangement.

In one embodiment both the inner and outer parts of the second portion have respective top plates which include corresponding ratchet parts that engage to prevent relative rotation of the parts. This type of ratchet arrangement may be referred to as a longitudinal ratchet arrangement, as opposed to known lateral arrangements which are positioned on side walls.

The first portion may comprise a sleeve. Certain industries, for example the spirits industry, demand closures with a first portion comprising a sleeve which is connected to a container and a second portion comprising a cap and a second portion.

The closure may further comprise a fitment such as a non-return fitment. Alternatively, the second portion may be adapted to engage a fitment associated with the container. It is therefore to be understood that a second portion for fixing to a container neck may be fixed directly or indirectly to the container neck. Certain industries, in particular the spirits industry, demand additional measures to prevent tampering. In-bore fitments, such as non-return fitments, are often fitted to containers to prevent re-filling regardless of other tamper-proofing measures.

A closure having an outer part movable relative to an inner part from a first position to a second position to generate a gap upon first opening of the closure may include an arrangement for preventing the inner part from moving relative to the second portion until the outer part has reached the second position. The gap is preferably unobstructed. This means that the closure would not have to rely on an obstructing member becoming trapped. By forming an unobstructed gap, it is not possible to defeat the tamper-evidence by a simple cutting operation. The gap may be formed at the respective adjacent peripheries of the first and second portions. The inner part may include a section which extends beyond the outer part towards the second portion in the second position; the part may be positioned so as to be visible through the gap. The first portion may be permanently fixed in its position on the container. This can be used to prevent the second portion from being moved to close the gap.

The second portion may further include a lateral ratchet arrangement for locking the inner and outer parts in the second position. This provides increased resistance to resetting.

The second portion may include engagement formations and the lateral ratchet arrangement may be located above the formations. The second portion may include formations, such as screw threads, for engaging the container or in-bore fitment. In such cases the ratchet arrangement or other locking mechanism may be located above the formations so as to increase the difficulty in accessing and tampering with the locking arrangement.

The closure may comprise a stopper or cork, which may be formed from natural or synthetic material.

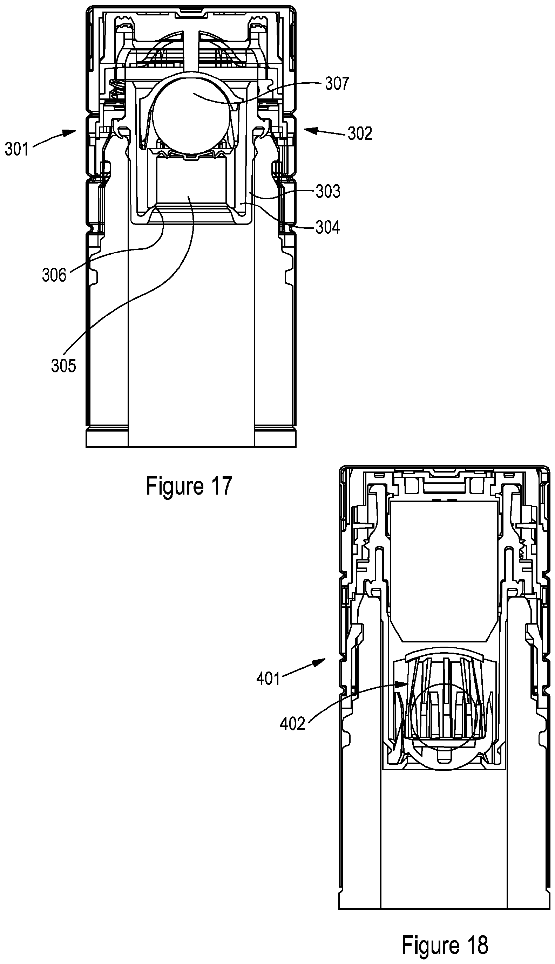

**Figures 17 & 18** show a second embodiment and a second example respectively of a closure having an integrally formed seal and seal support portion as described above with reference to **Figures 9 to 12** and **Figures 13 to 16** respectively.

**Figure 17** shows a second embodiment closure 301, which is similar to first embodiment closure 101. In common with the first embodiment closure 101, the second embodiment closure 301 is a security closure, having at least one tamper-evidence feature. However, unlike the first embodiment closure 101, the first portion 302 of the second embodiment closure 301 comprises a non-return fitment. In this second embodiment, the first portion 302 comprises a body 303, a valve housing 304 fixed within the body 303, a float valve 305 housed in the valve housing 304 and that can seal against a valve seat 306 to prevent re-filling of the container, and a valve control ball 307 is located on top of the float valve 305.

**Figure 18** shows a second example closure 401, which is similar to first example closure 201. In common with the first example closure 201, the second example closure 401 is a security closure, having at least one tamper-evidence feature. However, unlike the first example closure 101, the first portion 402 of the second example closure 401 comprises a non-return fitment. Similar to the function of the non-return fitment of the second embodiment closure 301, the non-return fitment of the second example closure 401 prevents re-filling of the container; however, the arrangement of the non-return fitment of the second example closure 401 is different from the arrangement of the non-return fitment of the second embodiment closure 301.

It is to be appreciated that a closure provided with an integrally formed seal and seal support portion as described herein may also be provided with any suitable type of flow regulation and/or non-return system or feature. It is to be appreciated also that a closure provided with an integrally formed seal and seal support portion as described herein and a non-return system or feature may or may not be a security closure.

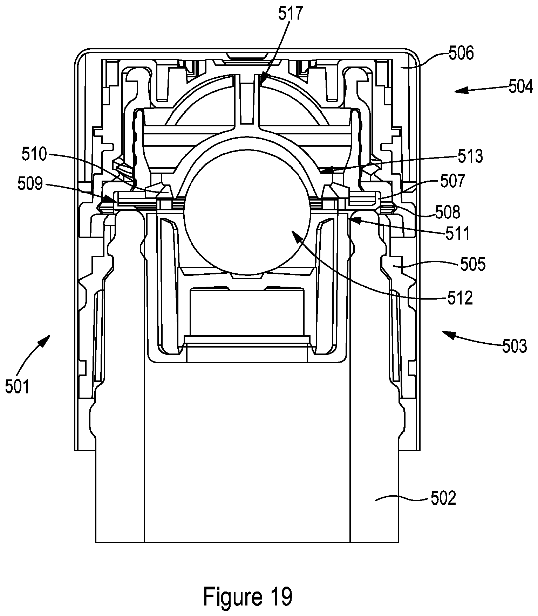

**Figures 19 to 24** show a third example of a closure having a bi-moulded seal and seal support portion. This third example closure 501 is similar in some respects to the first embodiment closure 101 and is similar in some respects to the second embodiment closure 301. The third example closure 501 is shown fitted to a container neck 502.

Closure 501 comprises a first portion, indicated generally at 503, and a second portion, indicated generally at 504. The first portion 503 comprises a body, indicated at 505, for fixing to a container neck. The second portion 504 comprises a cap, indicated at 506, that is releasably engageable with the body 505. The cap 506 is movable relative to the body 505 from and into a closed condition of the closure 501.

The first portion 503 comprises a seal 507 extending from a seal support portion 508. The seal 507 comprises an outer seal portion 509 for sealing against a container neck 502 and an inner seal portion 510. The seal support portion 508 is formed from a first plastics material, the seal 507 is formed from a second plastics material that is more compliant than the first plastics material, and the seal 507 is formed integrally with the seal support portion 508. In an example, the seal 507 and seal support portion 508 are bi-injection moulded.

The first portion 503 comprises a non-return valve body 511, in this example a bucket, and a non-return valve member 512, in this example a ball.

The first portion 503 also comprises a non-return valve member shield 513.

According to this example, the seal support portion 508 is a portion of the non-return valve body 512.

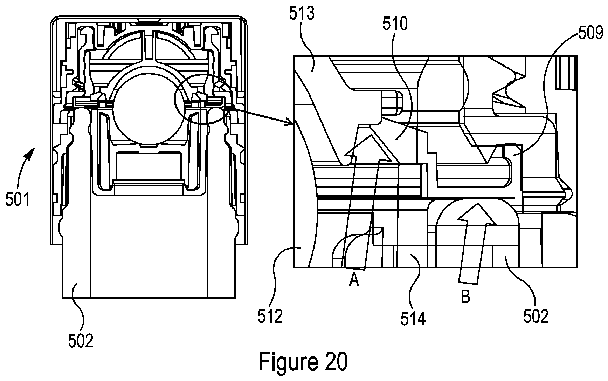

As can be seen in **Figures 19** **and** **20****,** the non-return valve member shield 513 shields the non-return valve member 512 and seals against the inner seal portion 510 of the seal 507.

It can be seen from **Figure 20** in particular that, in this illustrated example, the outer seal portion 509 extends radially outwardly of a wall 514 of the non-return valve body 511 and the inner seal portion 510 extends radially inwardly of the wall 514 of the non-return valve body 511.

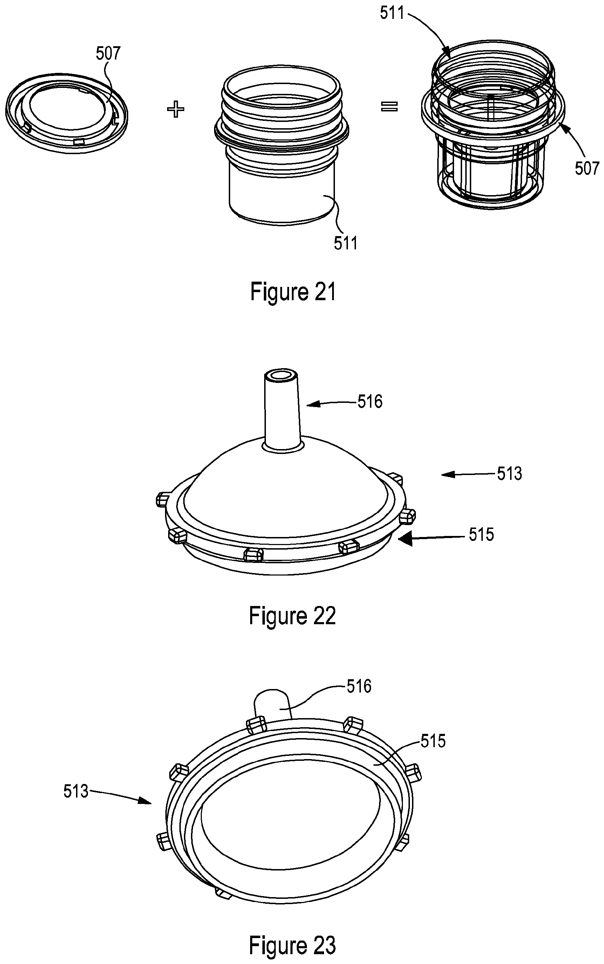

When the closure 501 is fitted on a container neck 502, the wall 514 of the non-return valve body 511 is disposed between the position A at which the non-return valve member shield 513 and the inner seal portion 510 are in sealing contact and the position B at which the outer seal portion 509 and the container neck 502 are in sealing contact. This arrangement can be seen in **Figure 21****.**

It is to be appreciated that a bi-moulded seal as described herein may be provided as a main seal or a supplementary seal. It is to be understood that a seal formed integrally with a seal support portion as disclosed herein may be provided as a closure seal, for sealing between portions of the closures, or a container neck seal, for sealing between the closure and a container neck.

In an alternative example, the seal comprises only a single seal portion, which may be an inner seal portion or an outer seal portion as described above.

**Figure 21** illustrates steps in forming the non-return valve body 511 with integral seal 507. A two shot injection process is performed, in which during a first stage the second, more compliant material of the seal 506 is injected into the moulding tool and then during a second stage the first material of the non-return valve body 510 is injected into the moulding tool, the first material being moulded around the second material.

The non-return valve member shield 513 of the cap 505 is shown in further detail in **Figures 22 and 23****.** In an example, the non-return valve member shield 513 is moulded from a relatively hard and pierce-resistant material, to prevent rupture by a sharp instrument used to attack the component. The non-return valve member shield 513 nests into the seal 507, and an effective transit seal is formed. This method eliminates a large tolerance accumulation from the ball, float and float seat. For example, glass balls have an industry tolerance of ± 0.5 mm for size and roundness. This also protects the float seat and gas release. In addition, the shape of the non-return valve member shield 513, which has a dome-shaped lower portion 515 and an extension portion 516 upstanding from the dome-shaped lower portion 515, prevents use of the plunger hole 517 in the body 505 from being used to defeat the non-return valve. Further, the non-return valve member shield 513 shields the non-return valve from a wire attack.

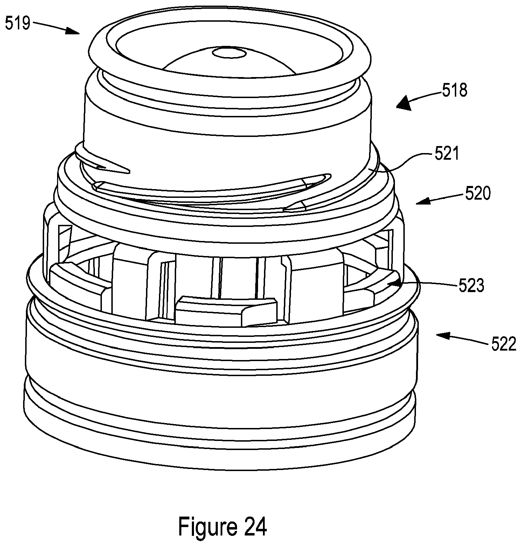

The body 505 is shown in further detail in **Figure 24****.** In this example, the body 505 has an upper portion 518, which presents a non-drip lip 519, an intermediate portion 520, which presents a screw thread 521 positioned relatively low in the body 505 to accommodate break ring protection, and a lower portion 522 which presents at least one clip 523 for use in fixing the body 505 to a container neck.

It is to be appreciated that a seal formed integrally with a seal support portion as disclosed herein may be incorporated in the first portion and/or in the second portion of a closure comprising a first portion comprising a body for fixing to a container neck, and a second portion comprising a cap releasably engageable with the body.

In an example, a closure for a container neck, the closure comprising a body for fixing to a container neck, and a retention member for retaining the body on a container neck, the body formed from a first plastics material, the retention member formed from a second plastics material that is different from said first plastics material, and the retention member formed integrally with the body, is provided. Accordingly, there is provided a method of forming the closure of the example. Accordingly, there is also provided a container comprising a container neck provided with the closure of the example.

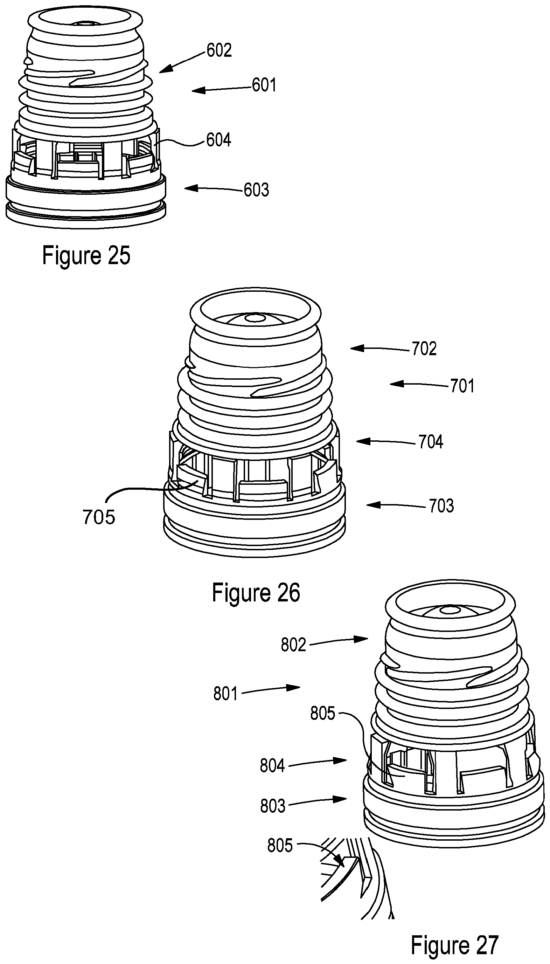

**Figures 25 to 27** shows different examples of a closure body with integrally formed retention member for retaining the closure body on a container neck. The closure body may be used in any suitable closure.

In **Figure 25****,** a body 601 is shown having an upper portion 602 and a lower portion 603. The upper portion 602 presents a pourer and the lower portion 603 presents a retention member 604 for use in securing the body 601 to a container neck. The retention member 604 may be a clip. In the illustrated arrangement, the lower portion 603 of the body presents a plurality of radially spaced clips. The body 601 is formed from a first plastics material, the retention member 604 is formed from a second plastics material that is different from the first plastics material, and the retention member 604 is formed integrally with the body 601.

According to a method of forming the body, the body and retention member are bi-injection moulded. According to a method of forming a closure comprising the body, the body and retention member are bi-injection moulded.

In an example, the second plastics material is more heat resistant than the first plastics material. In an example, the first plastics material is polyethylene terephthalate (PET) and the second plastics material is a fibre reinforced polymer composite.

According to the arrangement shown in the **Figure 25****,** the upper portion 602 is formed from the first plastics material and the lower portion 603 is formed from the second plastics material. In the axial direction of the body 601, there is a junction between the first and second plastics materials.

The first and second plastics materials may be any suitable materials. In an example, the first and second plastics materials are different colours.

In an example, the first plastics material is a transparent or translucent and the second plastics material is opaque. In an example, a more aesthetically pleasing plastics material may be used for regions of the body that are more visible when the closure is in use.

In **Figure 26****,** a body 701 is shown having an upper portion 702, a lower portion 703 and an intermediate portion 704 comprising at least one retention member 705.

**Figure 27** also shows a body 801 having an upper portion 802, a lower portion 803 and an intermediate portion 804 comprising at least one retention member 805.

From comparison of bodies 701 and 801 of **Figures 26 and 27****,** in the arrangement of body 701 the second plastics material forms part of the internal surface of the body 701 and also forms part of the external surface of the body 701, whereas in the arrangement of body 801 the second plastics material forms part of the internal surface of the body 801 but does not also form part of the exterior of the body 801.

It is to be appreciated that a body with integrally formed retention member may have any suitable arrangement different from the arrangements shown in **Figures 25 to 27****.**

A body formed with an integral retention member may be snap-fittable onto a container neck. The body may for example by be provided with windows that include a retention clip/lug/ledge/flap to engage under a bead onto the neck of a container. The container may be a glass bottle, for example a spirits (such as whisky or vodka) bottle.

A closure comprising a body formed with an integral retention member as disclosed herein may or may not be have a tamper-indicating feature and may or may not have a flow regulator or non-return valve.

In an example, a closure for a container neck, the closure comprising a shell and an indicating arrangement configured to provide a visible marking in a side wall of the shell in response to an axial force applied to the closure to close the gap, is provided. Accordingly, there is provided a container comprising a container neck provided with the closure of the example.

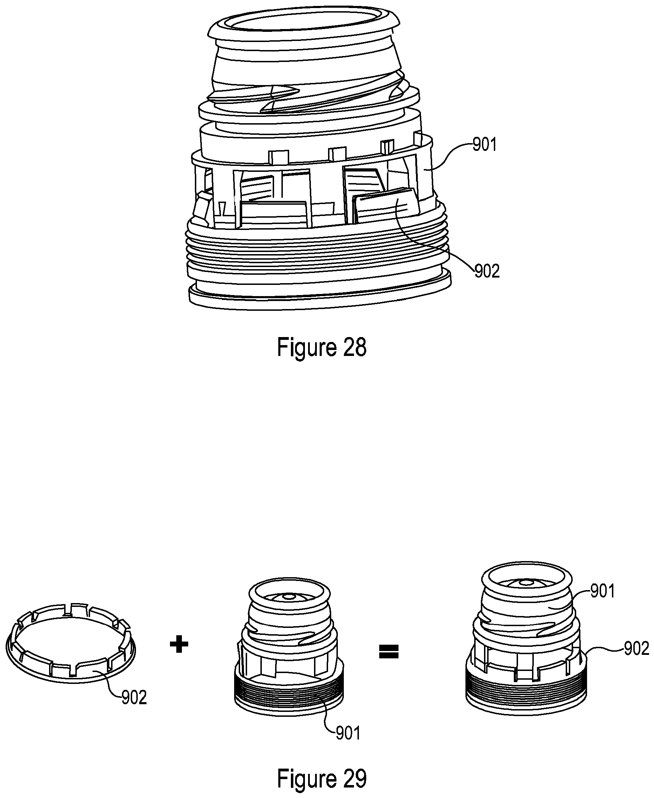

**Figure 28** shows a further example of a body 901 and a retention member 902 formed integrally with the body 901. **Figure 29** illustrates steps in forming the body 901 with integral retention member 902. A two shot injection process is performed, in which during a first stage the retention member 902 is moulded then during a second stage the body 901 is moulded. The body 901 is moulded over the retention member 902. The body is thus bi-moulded, and has an in-moulded retention member. In an example, the retention member 902 is formed from a fibre-filled polycarbonate material and the body 901 is formed from a polyethylene terephthalate material.

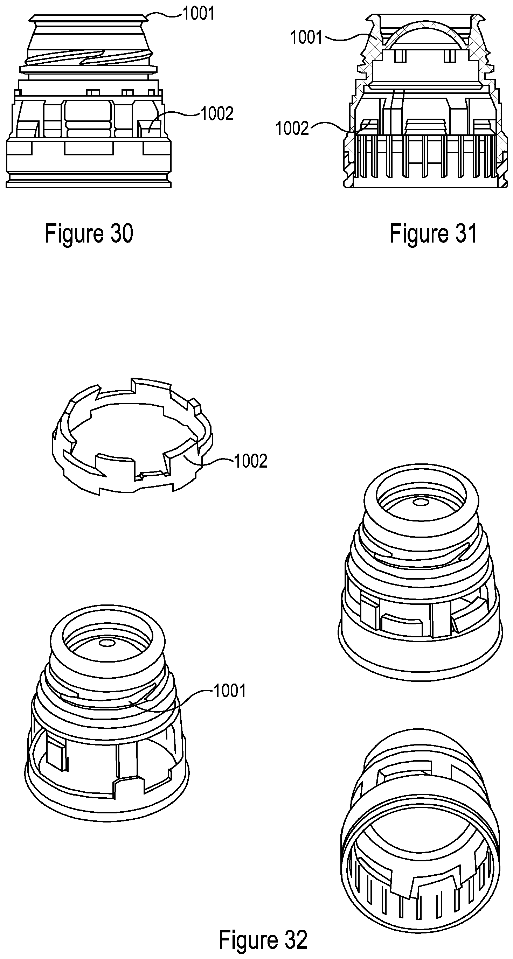

Another example of a body 1001 and a retention member 1002 formed integrally with the body 1001 is shown in **Figures 30 to 32****.** The body 1001 and retention member 1002 are bi-injection moulded. The retention member 1002, which comprises a plurality of clips, is moulded first and body 1001 is moulded over the retention member 1002.

According to a fourth example of a closure having a bi-moulded seal and seal support portion, the closure comprises a first portion comprising a body for fixing to a container neck, and a second portion comprising a cap releasably engageable with the body, the first portion comprising a float, the float comprising a seal on a seal support portion, seal support portion formed from a first plastics material, the seal formed from a second plastics material that is more compliant than the first plastics material, and the seal formed integrally with the seal support portion.

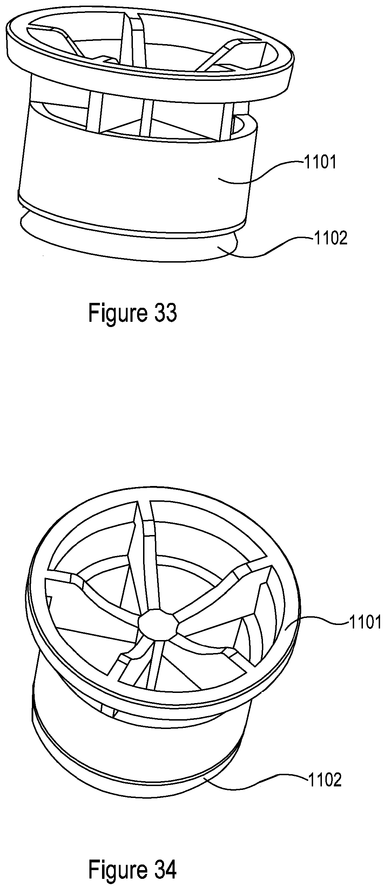

A float 1101 with integral seal 1102 is shown in **Figures 33 and 34****.** In use, the weight of liquid acting downwards creates a good seal. The float 1101 fills with liquid and compresses the seal 1102. In this illustrated example, the float 1101 is designed to be used with or without a ball on top. In an example, the float 1101 is fabricated from polyethylene terephthalate (PET).

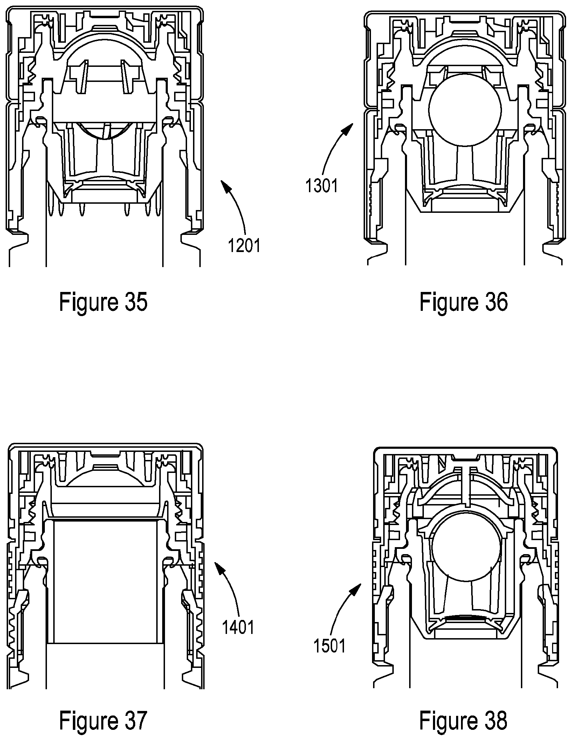

**Figures 35 to 38** show further embodiments of closures having a bi-moulded seal and seal support portion, the closures being aluminium closures. **Figure 35** shows a 'non-return' closure 1201, **Figure 36** shows a 'non-return with ball' closure 1301, **Figure 37** shows an 'open pour' closure 1401 and **Figure 38** shows a 'non-return with ball and transit seal' closure 1501.

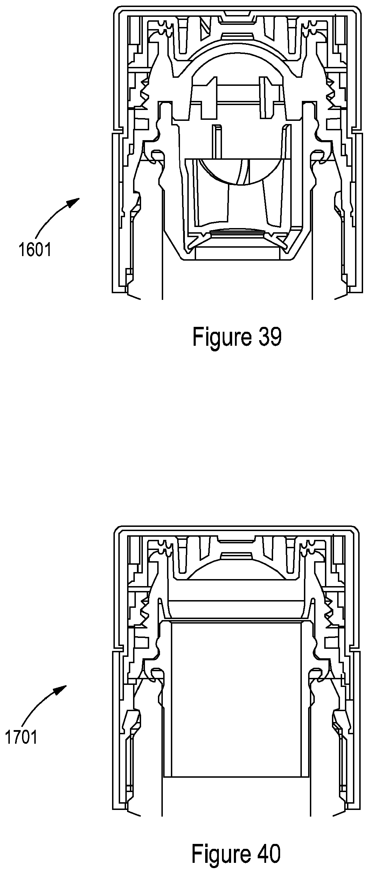

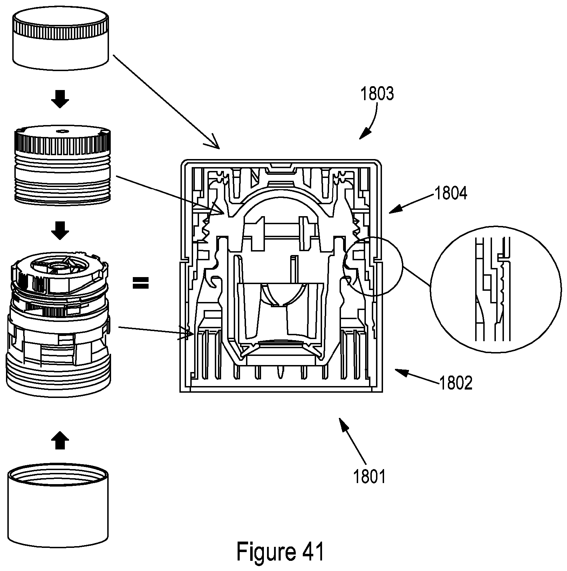

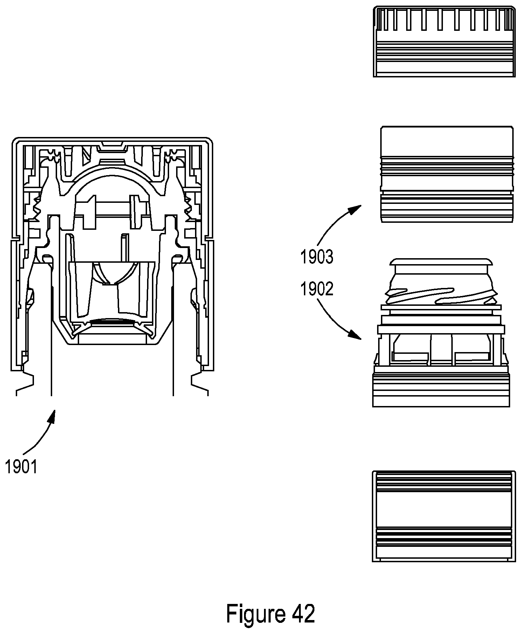

**Figures 39 to 42** show further embodiments of closures having a bi-moulded seal and seal support portion, the closures being plastic closures. **Figure 39** shows a 'non-return' closure 160 and **Figure 40** shows an 'open pour' closure 1701. **Figure 41** shows a closure 1801 and components thereof. In an example, the closure 1801 comprises a skirt 1802 and a cap 1803 formed from Acrylonitrile Butadiene Styrene (ABS), and an outer ratchet 1804 formed from Polypropylene (PP) that is hot knifed. **Figure 42** shows a closure 1801 and components thereof. Parts 1902 and 1903 are provided with anti-rotation ribs. Bump off micro-ribs are provided for push fit assembly. The micro-ribs are small, for example 0.1 mm high and 0.22 mm wide, and are used to hold the parts together with a tight fit.

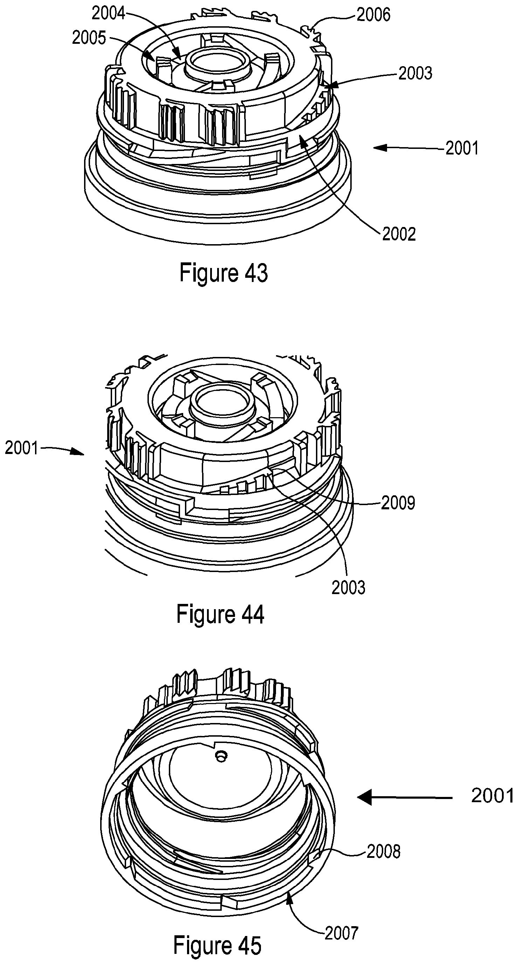

**Figures 43 to 47** show features of an example closure ratchet arrangement. The closure ratchet arrangement is suitable for use in a closure comprising: a first portion comprising a body for fixing to a container neck and, a second portion comprising a cap releasably engageable with the body; in which the cap comprises inner and outer parts, the outer part is rotatable in a first direction relative to the inner part from a first position in which a region of the outer part is immediately adjacent a region of the body to a second position in which there is a gap between said region of the outer part and said region of the body, the cap further comprises a locking arrangement for irreversibly locking the outer part in the second position and the cap furthermore comprises a shell and an indicating arrangement configured to provide a visible marking in a side wall of the shell in response to an axial force applied to the cap to close the gap.

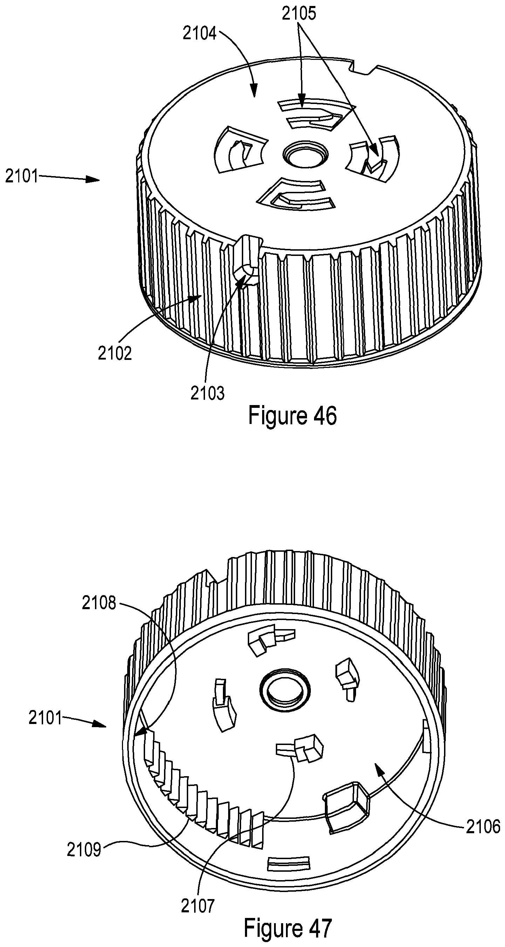

**Figures 43 to 45** show an inner part 2001 of the ratchet arrangement, and **Figures 46 and 47** show an outer part 2101 of the ratchet arrangement. The outer part 2101 is rotatable relative to the inner part 2001 from a first position associated with the unopened condition of the closure (prior to first opening) to a second position associated with the opened condition of the closure (following first opening).

In the specific illustrated arrangement, an exterior side wall 2002 of the inner part 2001 is provided with at least one side ramp 2003, and an exterior top wall 2004 of the inner part 2001 is provided with at least one top ramp 2005. The exterior side wall 2002 of the inner part 2001 is also provided with ratchet teeth 2006. As can be seen in **Figure 45****,** an interior side wall 2007 of the inner part 2001 is provided with locking teeth 2008. In this example, the inner part 2001 comprises a plurality of side ramps 2003, a plurality of top ramps 2005, a plurality of sets of ratchet teeth 2006 and a plurality of locking teeth 2008.

Referring to **Figures 46 and 47****,** an exterior side wall 2102 of the outer part 2101 is provided with at least one side marking member 2103, and an exterior top wall 2104 of the outer part 2101 is provided with at least one top marking member 2105. An interior top wall 2106 of the outer part 2101 is provided with at least one rib 2107. As can be seen in **Figure 47****,** an interior side wall 2108 of the outer part 2101 is provided with ratchet teeth 2109. In this example, the outer part 2101 comprises a plurality of side marking members 2103, a plurality of top marking members 2105, a plurality of ribs 2107, and a plurality of ratchet teeth 2109.

During first opening of the closure, the outer part 2101 is rotated and the ribs 2107 of the outer part 2101 ride up the top ramps 2005 of the inner part 2001. When the outer part 2101 has reached the second position, the ribs 2107 and ramps 2005 help keep the closure stable. The top marking members 2105 are operatively associated with the ribs 2107. In an example, one top marking member 2105 is connected to, or integral with, a rib 1007. In the illustrated example, each top marking member 2105 is formed as a flap that can be pivoted from a non-activated position in which the flap is flush with or below the surrounding surface to an activated position in which the flap projects above the surrounding surface.

In addition, during first opening of the closure, the outer part 2101 is rotated, to unscrew the cap from the body, and the side marking members 2103 of the outer part 2101 ride up the side ramps 2003 of the inner part 2001 and are moved into a positive location relative to the side ramps 2003, after which the side marking members 2103 resist counter-rotation of the outer part 2101 relative to the inner part 2001 from the second position. It is to be appreciated that counter-rotation of the outer part 2101 relative to the inner part 2001 is also resisted by the engagement of the respective ratchet teeth 2006, 2109.

In the illustrated example, each side marking member 2103 is formed at the corner of the side and top of the outer part 2101 and extends inwardly from the surrounding surface so that the side marking member 2103 has a bottom wall.

The side marking members 2103 positively locate relative to the side ramps 2003 at a position at which an activation ramp 2009 is located. In the illustrated example, the activation ramp 2009 provides a ledge that projects radially outwardly from the surrounding surface so that the activation ramp 2009 has a top wall. When the side marking member 2103 is positively located, the bottom wall of the side marking member 2103 is above the top wall of the activation ramp 2009.

If an attempt is made to close the gap generated during first opening of the closure by applying sufficient force to the top of the closure in the axial direction of the closure, the top marking members 2105 are activated. As the shell part in which the outer part 2101 is located is pushed downwards, the ribs 2107 are pushed upwards and the top marking members 2105 mark the top of the shell.

Further, if the top of the closure is hammered, the side marking members 2103 are caused to pop out in the radial direction and mark the side of the shell.

This feature may be used separately from any other feature or features disclosed herein or may be used in combination with any other feature or features disclosed herein. Further it is to be appreciated that a first portion or a second portion of a closure as described herein may be supplied as a separate element for subsequent inclusion in a closure.

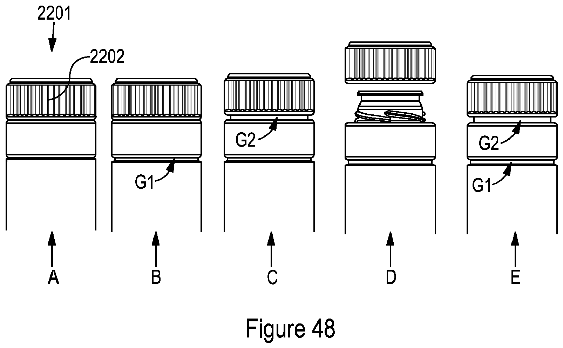

**Figure 48** shows steps in opening and reclosing a double gap generator closure 2201 having a removable lid 2202. At A, the closure 2201 is shown before first opening. At B, the closure 2201 is shown during first opening, after the lid 2202 has been rotated and a first gap G1 generated. At C, the closure 2201 is shown at a later moment during first opening, after the lid 2202 has been rotated further and a second gap G2 generated. The lid 2202 is shown removed at D. At E, the lid 2202 is shown having been replaced and it can be seen that the first and second gaps G1 and G2 are still present.

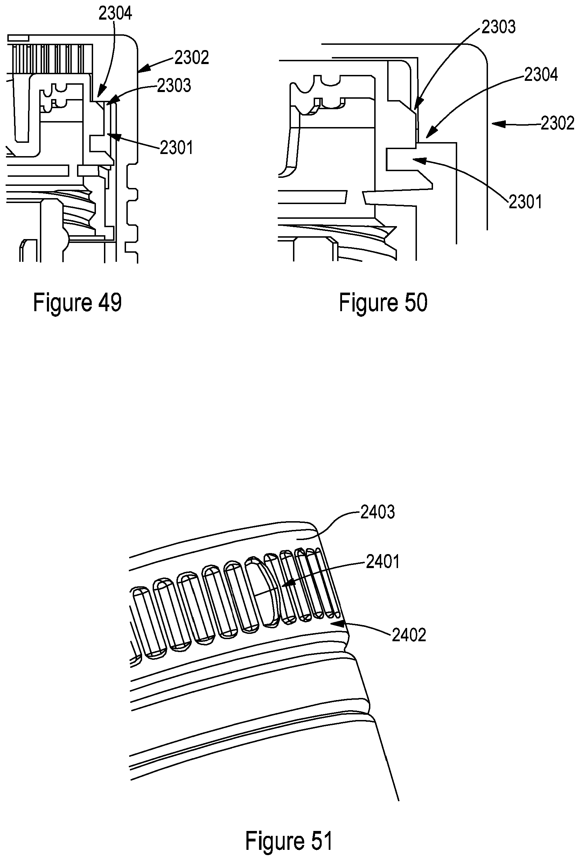

Features of a closure ratchet arrangement with side marking mechanism are shown in **Figures 49 to 51. Figure 49** illustrates the relative arrangement of an inner ratchet 2301, outer ratchet 2302, ramp 2303 of the inner ratchet 2301 and edge 2304 of the outer ratchet 2302 prior to the application of an impact force to the edge 2404. When a high impact force is applied to the edge 2304 of the outer ratchet 2302, the edge 2304 is forced over the ramp 2303 of the inner ratchet 2301 as illustrated in **Figure 50****.** As a result, and as shown in **Figure 51****,** a bulge 2401 is formed in the side wall 2402 of the closure shell 2403, to provide a visual indication of tampering.

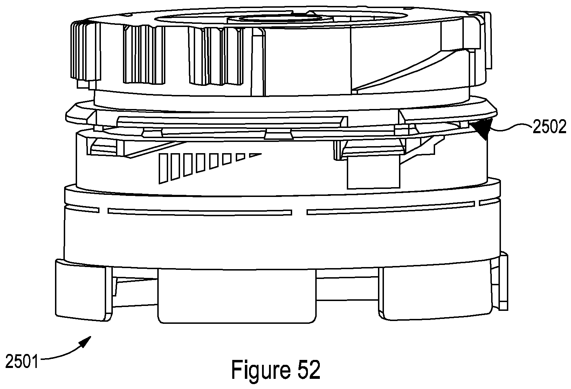

**Figure 52** shows an inner ratchet 2501 of a closure ratchet arrangement with a side marking generator mechanism, the inner ratchet 2501 comprising inner ratchet anti-tamper bridges 2502.

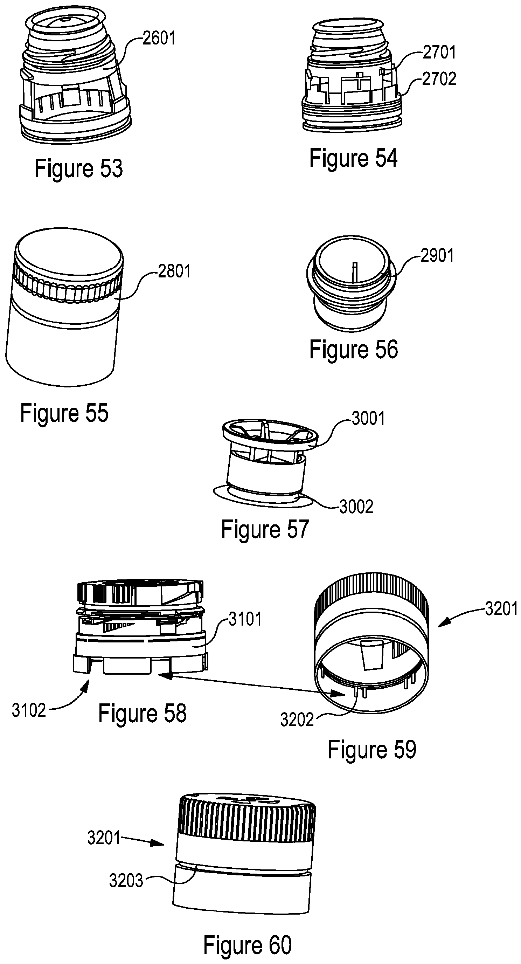

**Figures 53 to 60** show individual components usable in different versions of a closure. **Figure 53** shows a body 2601; **Figure 54** shows a body 2701 with in-moulded retention clips 2702; **Figure 55** shows an aluminium shell 2801; **Figure 56** shows a bucket 2901, which may be formed from Low-Density Polyethylene (LDPE); and **Figure 57** shows a float 3001 with bi-moulded seal 3002. **Figure 58** shows an inner ratchet component 3101 with a castellated lower edge 3102, and **Figures 59 and 60** show an outer ratchet component 3201. It can be seen in **Figure 59** that the outer ratchet component 3201 is provided with ribs 3202 that lock the outer ratchet component 3201 to the inner ratchet component 3101. As can be seen in **Figure 60****,** the outer ratchet component 3201 is also provided with hot knifed bridges 3203. The outer ratchet component 3201 may feature a bead.

Although illustrative embodiments of the invention have been disclosed in detail herein, with reference to the accompanying drawings, it is to be understood that the invention is not limited to the precise embodiments shown and that various changes and modifications can be effected therein by one skilled in the art without departing from the scope of the invention as defined by the appended claims.

## Claims

1. A closure (101) for a container neck, the closure (101) comprising:
a first portion (102) comprising a body (104) for fixing to a container neck, and
a second portion (103) comprising a cap (105) releasably engageable with the body (104);
the cap (105) comprises inner and outer parts (109, 110),
the outer part (110) is rotatable in a first direction relative to the inner part (109) from a first position in which a region of the outer part (110) is immediately adjacent a region of the body (104) to a second position in which there is a gap between said region of the outer part (110) and said region of the body (104),
the cap (105) further comprises a locking arrangement for irreversibly locking said outer part (110) in the second position, and
the inner part (109) comprises an inner ratchet component;
**characterised in that**:
the cap (105) comprises a closure seal (106) on a closure seal support portion (107), the closure seal for sealing against the body (104) when the cap (105) is engaged with the body (104) in a closed condition of the closure (101);
the closure seal support portion (107) formed from a first plastics material,
the closure seal (106) formed from a second plastics material that is more compliant than the first plastics material, and
the closure seal (106) formed integrally with the closure seal support portion (107); and
said closure seal support portion (107) is a portion of said inner ratchet component.

2. A closure (101) as claimed in claim 1, wherein said second plastics material is silicone or thermoplastic elastomeric resin.

3. A closure (101) as claimed in claim 1, wherein the inner part (109) includes a line of weakness (111) that breaks if the outer part (110) is rotated relative to the inner part (109) in a second direction opposite said first direction.

4. A closure (101) as claimed in claim 3, the line of weakness (111) formed by a line of reduced thickness of a wall (112) of the inner part (109).

5. A closure (101) as claimed in claim 1, wherein the closure (101) further comprises a non-return fitment.

6. A closure (101) as claimed in claim 1, wherein the cap (105) further comprises a shell (2403) and an indicating arrangement for providing a visible marking in a side wall (2402) of the shell (2403) in response to an axial force applied to the cap (105) to close the gap.

7. A container comprising a container neck provided with a closure (101), the closure (101) as claimed in claim 1.

8. A method of forming a closure (101), the closure (101) as claimed in claim 1, comprising the step of bi-injection moulding the closure seal support portion (107) and the closure seal (106).

## Patentansprüche

1. Ein Verschluss (101) für einen Behälterhals, wobei der Verschluss (101) umfasst:
einen ersten Abschnitt (102), der einen Körper (104) zur Befestigung an einem Behälterhals umfasst, und
einen zweiten Abschnitt (103) mit einer Kappe (105), die lösbar mit dem Körper (104) in Eingriff gebracht werden kann;
die Kappe (105) einem inneren Teil und einem äußeren Teil (109, 110) umfasst, der äußere Teil (110) in einer ersten Richtung relativ zu dem inneren Teil (109) aus einer ersten Position, in der ein Bereich des äußeren Teils (110) unmittelbar an einen Bereich des Körpers (104) angrenzt, in eine zweite Position, in der ein Spalt zwischen dem Bereich des äußeren Teils (110) und dem Bereich des Körpers (104) vorhanden ist, drehbar ist,
die Kappe (105) ferner eine Verriegelungsanordnung zur irreversiblen Verriegelung des Außenteils (110) in der zweiten Position umfasst, und
der innere Teil (109) eine innere Klinkenkomponente umfasst; **dadurch gekennzeichnet, dass**:
die Kappe (105) eine Verschlussabdichtung (106) auf einem Verschlussabdichtungsträgerabschnitt (107) umfasst, wobei die Verschlussabdichtung zum Abdichten gegen den Körper (104) dient, wenn die Kappe (105) mit dem Körper (104) in einem geschlossenen Zustand des Verschlusses (101) in Eingriff steht;
der Verschlussabdichtungsträgerabschnitt (107) aus einem ersten Kunststoffmaterial besteht,
die Verschlussabdichtung (106) aus einem zweiten Kunststoffmaterial besteht, das nachgiebiger als das erste Kunststoffmaterial ist, und
die Verschlussabdichtung (106), die einstückig mit dem Verschlussabdichtungsträgerabschnitt (107) ausgebildet ist; und
der Verschlussabdichtungssträgerabschnitt (107) ein Abschnitt der inneren Klinkenkomponente ist.

2. Verschluss (101) nach Anspruch 1, wobei das zweite Kunststoffmaterial Silikon oder thermoplastisches Elastomerharz ist.

3. Verschluss (101) nach Anspruch 1, wobei der innere Teil (109) eine Schwächungslinie (11 1) aufweist, die zerbricht, wenn der äußere Teil (110) relativ zum inneren Teil (109) in einer zur ersten Richtung entgegensetzen zweiten Richtung gedreht wird.

4. Verschluss (101) nach Anspruch 3, wobei die Schwächungslinie (11 1) durch eine Linie mit verringerter Dicke einer Wand (112) des Innenteils (109) gebildet wird.

5. Verschluss (101) nach Anspruch 1, wobei der Verschluss (101) auch eine Rückschlagausstattung umfasst.

6. Verschluss (101) nach Anspruch 1, wobei die Kappe (105) ferner eine Schale (2403) und eine Anzeigeanordnung zur Bereitstellung einer sichtbaren Markierung in einer Seitenwand (2402) der Schale (2403) als Reaktion auf eine Axialkraft umfasst, die auf die Kappe (105) ausgeübt wird, um den Spalt zu schließen.

7. Behälter umfassend einen Behälterhals, der mit einem Verschluss (101) versehen ist, wobei der Verschluss (101) nach Anspruch 1 beansprucht wird.

8. Verfahren zur Bildung eines Verschlusses (101), wobei der Verschluss (101) nach Anspruch 1 den Schritt des Bi-Spritzgießens des Verschlussabdichtungsträgerabschnitt (107) und der Verschlussabdichtung (106) umfasst.

## Revendications

1. Fermeture (101) pour le col d'un récipient, la fermeture (101) comprenant :
une première partie (102) comprenant un corps (104) destiné à être fixé au col d'un récipient, et
une seconde partie (103) comprenant un capuchon (105) pouvant être mis en prise de manière amovible avec le corps (104) ;
le capuchon (105) comprend des parties interne et externe (109, 110),
la partie externe (110) peut tourner dans une première direction par rapport à la partie interne (109) d'une première position dans laquelle une région de la partie externe (110) est immédiatement adjacente à une région du corps (104) à une seconde position dans laquelle il y a un espace entre ladite région de la partie externe (110) et ladite région du corps (104),
le capuchon (105) comprend également un dispositif de verrouillage pour verrouiller de manière irréversible ladite partie externe (110) dans la seconde position, et
la partie interne (109) comprend un élément à cliquet interne ; **caractérisé en ce que** :
le capuchon (105) comprend un joint de fermeture (106) sur une partie de support du joint de fermeture (107), le joint de fermeture étant destiné à assurer l'étanchéité contre le corps (104) lorsque le capuchon (105) est en prise avec le corps (104) dans un état fermé de la fermeture (101) ;
la partie de support du joint de fermeture (107) est formée à partir d'un premier matériau plastique,
le joint de fermeture (106) est formé à partir d'un second matériau plastique plus souple que le premier matériau plastique, et
le joint de fermeture (106) est formé intégralement avec la partie de support du joint de fermeture (107) ; et
ladite partie de support du joint de fermeture (107) est une partie de l'élément à cliquet interne.

2. Fermeture (101) selon la revendication 1, dans laquelle la seconde matière plastique est du silicone ou une résine élastomère thermoplastique.

3. Fermeture (101) selon la revendication 1, dans laquelle la partie interne (109) comporte une ligne de faiblesse (111) qui se rompt si la partie externe (110) est tournée par rapport à la partie interne (109) dans une seconde direction opposée à ladite première direction.

4. Fermeture (101) selon la revendication 3, la ligne de faiblesse (111) étant formée par une ligne d'épaisseur réduite d'une paroi (112) de la partie interne (109).

5. Fermeture (101) selon la revendication 1, dans laquelle la fermeture (101) comprend également un raccord anti-retour.

6. Fermeture (101) selon la revendication 1, dans laquelle le capuchon (105) comprend également une coque (2403) et un dispositif d'indication pour fournir un marquage visible sur une paroi latérale (2402) de la coque (2403) en réponse à une force axiale appliquée au capuchon (105) pour doser l'écart.

7. Récipient comprenant un col de récipient muni d'une fermeture (101), la fermeture (101) selon la revendication 1.

8. Procédé de formation d'une fermeture (101), la fermeture (101) selon la revendication 1, comprenant l'étape de moulage par bi-injection de la partie de support du joint de fermeture (107) et du joint de fermeture (106).
